# EUROPÄISCHE PATENTSCHRIFT

(11) **EP 0 731 289 B1**
(45) Veröffentlichungstag und Bekanntmachung des Hinweises auf die Patenterteilung: **16.08.2001**
(21) Anmeldenummer: 96103110.1
(22) Anmeldetag: 01.03.1996
(51) Int. Cl.: F16H 1/16, H02K 7/08

(54) **Vorrichtung zum Antreiben von Schiebedächern, Fensterhebern oder dergleichen**
Drive mechanism for sliding roofs, windows or the like
Dispositif d'entraînement de toits ouvrants, lève-glaces ou similaires

(30) Priorität: 10.03.1995 DE 19508556
(43) Veröffentlichungstag der Anmeldung: 11.09.1996
(73) Patentinhaber: WEBASTO KAROSSERIESYSTEME GmbH, D-82131 Stockdorf (DE)
(72) Erfinder: Schönsteiner, Jochen, 81245 München (DE)
(74) Vertreter: Wiese, Gerhard

(56) Entgegenhaltungen:
- DE-A- 2 715 770
- DE-A- 3 640 197
- DE-A- 4 116 368
- DE-A- 4 210 302
- GB-A- 348 703
- US-A- 3 161 447

## Beschreibung

Die Erfindung befaßt sich mit einer Vorrichtung zum Antreiben von Schiebedächern, Fensterhebern oder dergleichen, insbesondere von Kraftfahrzeugen, mit einem in seiner Drehrichtung umsteuerbaren Antriebsmotor, dem ein Schneckengetriebe nachgeordnet ist, dessen Schneckenwelle eine Verlängerung der Motorwelle bildet, sowie mit einer Einrichtung zur Einstellung des Axialspiels der Schneckenwelle, wobei diese Einrichtung ein in der Achsrichtung der Schneckenwelle verschiebbar geführtes, sich gegen das freie Ende der Schneckenwelle anlegendes Einstellteil aufweist.

Für die Einstellung des Axialspiels der Schneckenwelle einer Vorrichtung der eingangs genannten Art wurden in der Technik verschiedene Lösungen vorgeschlagen, die jedoch zumeist komplex im Aufbau oder problematisch in der Handhabung waren.

So wird beispielsweise in der gattungsbildenden DE-OS-29 05 869 ein Antriebsaggregat zum Antrieb von Wischvorrichtungen an Kraftfahrzeugen mit einem Elektromotor und einem diesem nachgeordneten Schneckengetriebe beschrieben, bei welchem eine koaxial zu der Schneckenwelle angeordnete, mit dem einen Ende der Schneckenwelle zusammenwirkende Einstellschraube vorgesehen ist, um das axiale Spiel der Schneckenwelle zu beseitigen.

Wenn das in DE-OS-29 05 869 beschriebene Antriebsaggregat als Antrieb für einen Fensterheber oder ein Schiebedach bei Kraftfahrzeugen benutzt werden soll, wird dieser Antrieb so in die Türfüllung oder Seitenverkleidung bzw. das Fahrzeugdach eingebaut, daß die Achse der Schneckenwelle in einer Ebene parallel zu der Fahrzeugtüre oder Seitenwand bzw. dem Fahrzeugdach liegt. Da sich das Axialspiel der Schneckenwelle nur im eingebauten Zustand des Antriebs in geeigneter Weise einstellen läßt, die Achse der Einstellschraube jedoch in einer Richtung koaxial zu der Schneckenachse verläuft, ergeben sich insofern Probleme bezüglich der Zugänglichkeit der Einstellschraube, als der Montageraum für den Antrieb, insbesondere wenn es sich um einen Antrieb für ein Schiebedach handelt, auf den speziellen Antrieb zugeschnitten ist, und somit der Antrieb, wenn überhaupt, nur schwer von der Seite zugänglich ist. Außerdem muß zur Axialspieleinstellung der Motor laufen, da sonst nicht erkannt werden kann, ob die Einstellschraube geeignet weit eingedreht ist.

Eine Vorrichtung mit einer Einstellschraube, die koaxial zur Achse einer Schneckenwelle angeordnetet ist, welche zum Antreiben von Schiebedächern oder Fensterhebern dient, ist auch aus der DE-A1 34 23 315 bekannt. Für diese Einrichtung gelten die gleichen, bereits weiter oben beschriebenen Nachteile.

Schließlich ist aus der DE-A1 42 10 302 eine Antriebsvorrichtung für Schiebedächer oder Fensterheber bekannt, bei der das freie Ende der Schneckenwelle durch ein in Richtung von deren Achse verstellbares, federnd gelagertes Stützteil abgestützt ist. Eine solche federnde Abstützung ist zwar geeignet, Toleranzen in axialer Richtung aufzunehmen, bietet jedoch keine feste Abstützung der Schneckenwelle. Die Schneckenwelle benötigt in diesem Falle ein zusätzliches, in beiden axialen Richtungen wirkendes Festlager.

Demgemäß ist es eine Aufgabe der vorliegenden Erfindung, eine Vorrichtung zum Antreiben von Schiebedächern, Fensterhebern oder dergleichen zu schaffen, bei welcher die Einstellung des Axialspiels aus einer zu der Einbauebene der Vorrichtung senkrechten Richtung erfolgt.

Diese Aufgabe wird bei der vorliegenden Erfindung durch die Merkmale des Patentansprüchs 1 gelöst.

Weitere Ausgestaltungen der Erfindung ergeben sich aus den Unteransprüchen.

Insbesondere kann das Einstellteil mit einem sich in Richtung der Schneckenwellenachse erstreckenden Längsschlitz oder einer Längsnut versehen sein, durch die sich die Fixierschraube mit ihrem Schaft hindurcherstreckt.

Das Einstellteil kann aus einem im Vergleich zu dem Werkstoff der Fixierschraube weichen Werkstoff, vorzugsweise Kunststoff, bestehen, in den sich die Fixierschraube mit ihrem Kopf beim Anpressen des Einstellteils an die Führungsfläche eingräbt, um ein Verrutschen des Einstellteils nach erfolgter Einstellung des Axialspiels der Schneckenwelle durch einen kombinierten Kraft- und Formschluß zu verhindern.

Um ein Ausweichen der Schneckenwelle in einer Richtung weg von der Achse des Schneckenrads zu verhindern, kann das Einstellteil eine Aufnahme für das freie Ende der Schneckenwelle aufweisen.

In weiterer Ausgestaitung der Erfindung kann das Einstellteil in einer im Querschnitt U-förmigen, in Richtung auf den Kopf der Fixierschraube offenen Führungsschiene geführt sein, deren Boden die Führungsfläche bildet. Insbesondere kann diese Führungsschiene einen Teil des Getriebegehäuses bilden.

Bevorzugte Ausführungsbeispiele der Erfindung werden im folgenden unter Bezugnahme auf die beiliegenden Zeichnungen im Detail beschrieben. Es zeigen:
- FIG. 1: eine Draufsicht auf eine Vorrichtung zum Antreiben von Schiebedächern, Fensterhebern oder dergleichen,
- FIG. 2: einen Längsschnitt durch ein Einstellteil und das freie Ende einer Schneckenwelle entsprechend der Linie II-II der FIG. 1,
- FIG. 3: einen Querschnitt entlang der Linie III-III der FIG. 1, und
- FIG. 4: eine Variante zur Fig. 2, mit einem mittels eines Fixieriets befestigten Einstellteil

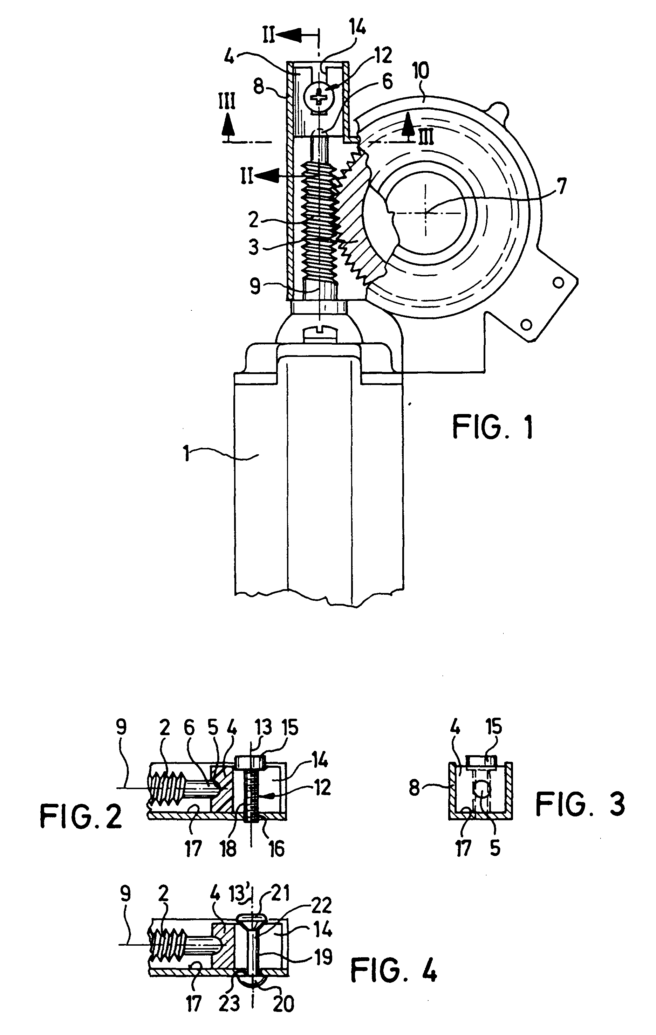

Die in FIG. 1 gezeigte Vorrichtung zum Antreiben von Schiebedächern, Fensterhebern oder dergleichen weist einen elektrischen Antriebsmotor 1 auf, dessen Abtriebswelle als eine Schneckenwelle 2 ausgebildet ist. Es versteht sich, daß es sich bei der Abtriebswelle des Antriebsmotors 1 und der Schneckenwelle 2 auch um zwei separate Teile handeln kann, die z.B. mittels eines Flansches miteinander verbunden sind. Die Schneckenwelle 2 treibt ein Schnekkenrad 3 an, das in hier nicht dargestellter Weise mit weiteren Arbeitsmitteln gekoppelt ist, insbesondere mit einem Ritzel für den Antrieb der Antriebskabel eines Schiebedachs, Schiebehebedachs, Fensterhebers oder dergleichen.

Zur Einstellung des Axialspiels der Schneckenwelle 2 ist ein Einstellteil 4 vorgesehen, das zweckmäßig aus einem relativ weichen Werkstoff, insbesondere Kunststoff, besteht. Das Einstellteil 4 weist eine Aufnahme 5 in Form einer konkaven, beispielsweise mehr oder minder halbkugeligen, Einbuchtung auf, in welche sich das freie Ende 6 der Schneckenwelle 2 einlegt, um auf diese Weise bei Belastung ein Ausweichen der Schneckenwelle 2 in einer Richtung weg von der Achse 7 des Schneckenrades 3 zu verhindern. Das Einstellteil ist in einer im Querschnitt U-förmigen Führungsschiene 8 in Richtung der Achse 9 der Schneckenwelle 2 verschiebbar geführt. Die Führungsschiene 8 kann zweckmäßig als Teil eines u.a. die Schneckenwelle 2 und das Schneckenrad 3 aufnehmenden Getriebegehäuses 10 ausgebildet sein.

Das Einstellteil 4 wirkt mit einer Fixierschraube 12 zusammen, deren Achse 13 mindestens näherungsweise senkrecht zu der Schneckenwellenachse 9 steht. Die Fixierschraube 12 durchgreift bei der veranschaulichten Ausführungsform mit ihrem Schaft 18 einen sich in Richtung der Schneckenwellenachse 9 erstreckenden Längsschlitz 14 des Einstellteils 4. Dieser Schlitz ist an der von der Schneckenwelle 2 abliegenden Seite offen. Die Fixierschraube ist in eine Bohrung 16 eingeschraubt, die in einer Führungsfläche 17 der Führungsschiene 8 ausgebildet ist. Die Bohrung 16 kann als Gewindebohrung ausgebildet sein. Vorzugsweise ist als Fixierschraube jedoch eine selbstschneidende Schraube vorgesehen, so daß es keines vorgefertigten Gewindes für die Bohrung 16 bedarf. Bei der als Ausführungsbeispiel veranschaulichten, im Querschnitt vorzugsweise U-förmigen Führungsschiene 8 handelt es sich bei der Führungsfläche 17 um die Bodenfläche der Schiene.

Beim Anziehen der Fixierschraube 12 legt sich deren Kopf 15 gegen die von der Führungsfläche 17 abgewendete Seite des Einstellteils 4 an und preßt letzteres gegen die Führungsfläche 17. Dabei gräbt sich der Kopf 15 in das relativ weiche Einstellteil 4 ein, wodurch ohne zusätzliche Hilfsmittel eine Sicherung des Einstellteils 4 in der für das gewünschte Axialspiel der Schneckenwelle 2 sorgenden Lage durch einen kombinierten Kraft- und Formschluß gewährleistet ist. Die Einstellung des Axialspiels gestaltet sich bei Verwendung der vorliegend offenbarten Vorrichtung besonders einfach. Bei gelöster Fixierschraube 12 braucht nur das Einstellteil 4 gegen das freie Ende 6 der Schneckenwelle 2 entsprechend angelegt zu werden, wobei das Schneckenwellenende 6 in die Aufnahme 5 eintaucht. Dann wird die Fixierschraube 12 angezogen. Alle diese Arbeitsgänge lassen sich an leicht zugänglicher Stelle in z-Richtung ausführen.

Gemäß einer in Fig. 4 dargestellten abgewandelten Ausführungsform weist die Führungsfläche 17 dort statt der Gewindebohrung 16 eine Durchgangsbohrung 23 auf, die vom Schaft 22 eines Fixierniets 19 durchdrungen wird. Der Kopf 21 des Fixierniets 19 gräbt sich beim Vernieten (Anziehen und Anformen eines Schließkopfes 20) in das relativ weiche Einstellteil 4 ein, sodaß auch hier das eingestellte Axialspiel durch einen kombinierten Kraft- und Formschluß gewährleistet ist.

Statt der Gewindebohrung 16 kann auch im ersten Ausführungsbeispiel eine Durchgangsbohrung vorgesehen sein, die von einem Schaft einer auf der Außenseite der Führungsfläche 17 mittels einer Mutter befestigten Schraube durchdrungen wird.

Im Rahmen der Erfindung läßt sich das veranschaulichte Ausführungsbeispiel auf weitere verschiedenartige Weise abwandeln. Beispielsweise kann das Einstellteil auch aus einem starren Werkstoff, insbesondere Metall, gefertigt sein. In einem solchen Fall ist zweckmäßig für eine zusätzliche Sicherung der Fixierschraube, beispielsweise durch einen unter deren Kopf eingelegten Federring zu sorgen. An Stelle des einseitig offenen Längsschlitzes 14 kann auch eine langlochförmige Nut vorgesehen sein.

### Bezugszeichenliste

- 1: Motor
- 2: Schneckenwelle
- 3: Schneckenrad
- 4: Einstellteil
- 5: Aufnahme in 4
- 6: freies Ende von 2
- 7: Achse - Schneckenrad
- 8: Führungsschiene
- 9: Achse Schneckenwelle
- 10: Getriebegehäuse
- 12: Fixierschraube
- 13,13': Achse von 12
- 14: Längsschlitz von 4
- 15: Kopf von 12
- 16: Gewindebohrung
- 17: Führungsfläche von 8
- 18: Schaft von 12
- 19: Fixierniet
- 20: Schließkopf
- 21: Kopf(von 19)
- 22: Schaft (von 19)
- 23: Bohrung

## Patentansprüche

1. Vorrichtung zum Antreiben von Schiebedächern, Fensterhebern oder dergleichen, insbesondere von Kraftfahrzeugen, mit einem in seiner Drehrichtung umsteuerbaren Antriebsmotor (1), dem ein Schneckengetriebe nachgeordnet ist, dessen Schneckenwelle (2) eine Verlängerung der Motorwelle bildet, sowie mit einer Einrichtung zur Einstellung des Axialspiels der Schneckenwelle (2), wobei diese Einrichtung ein in der Achsrichtung (9) der Schneckenwelle (2) verschiebbar geführtes, sich gegen das freie Ende (6) der Schneckenwelle (2) anlegendes Einstellteil (4) aufweist, **dadurch gekennzeichnet,** daß das Einstellteil (4) gegen eine Einstellteil-Führungsfläche (17) mittels einer Fixierschraube (12) oder eines Fixierniets (19) anpreßbar ist, wobei die Fixierschraube (12) bzw. der Fixierniet (19) eine Bohrung (23, 16) in der Führungsfläche (17) durchdringt und die Achse (13,13') der Bohrung (23, 16) mindestens näherungsweise senkrecht zu der Schneckenwellenachse (9) steht.

2. Vorrichtung nach Anspruch 1, dadurch gekennzeichnet, daß das Einstellteil (4) mit einem sich in Richtung der Schneckenwellenachse (9) erstreckenden Längsschlitz (14) oder einer Längsnut versehen ist, durch die sich die Fixierschraube (12) mit ihrem Schaft (18) bzw. der Fixierniet (19) mit seinem Schaft (22) hindurcherstreckt.

3. Vorrichtung nach Anspruch 1 oder 2, dadurch gekennzeichnet, daß das Einstellteil (4) aus einem im Vergleich zu dem Werkstoff der Fixierschraube (12) weichen Werkstoff besteht, in den sich die Fixierschraube (12) mit ihrem Kopf (15) bzw. der Fixierniet (19) mit seinem Kopf (21) beim Anpressen des Einstellteils (4) an die Führungsfläche (17) eingräbt.

4. Vorrichtung nach Anspruch 3, dadurch gekennzeichnet, daß das Einstellteil (4) aus Kunststoff besteht.

5. Vorrichtung nach einem der vorhergehenden Ansprüche, dadurch gekennzeichnet, daß das Einstellteil (4) eine Aufnahme (5) für das freie Ende (6) der Schneckenwelle (2) aufweist, die ein Ausweichen der Schneckenwelle in einer Richtung weg von der Achse (7) des Schneckenrads (3) verhindert.

6. Vorrichtung nach einem der vorhergehenden Ansprüche, dadurch gekennzeichnet, daß das Einstellteil (4) in einer im Querschnitt vorzugsweise U-förmigen, in Richtung auf den Kopf (15) der Fixierschraube (12) bzw. den Kopf (21) des Fixierniets (19) offenen Führungsschiene (8) geführt ist, deren Boden die Führungsfläche (17) bildet.

7. Vorrichtung nach Anspruch 6, dadurch gekennzeichnet, daß die Führungsschiene (8) einen Teil des Getriebegehäuses (10) bildet.

## Claims

1. A device for driving sliding roofs, window raisers or the like, particularly of motor vehicles, with a drive motor (1) adapted to reverse its direction of rotation, and downstream of which there is a worm gear mechanism of which the worm shaft (2) constitutes an extension of the motor shaft, and with a means of adjusting the axial clearance of the worm shaft (2), the said means comprising, guided for displacement in the axial direction (9) of the worm shaft (2), an adjustment part which bears against the free end (6) of the worm shaft (2), characterised in that the adjustment part (4) is adapted to be pressed by a fixing screw (12) or fixing rivet (19) against a guide surface (17) on the adjustment part, the fixing screw (12) or fixing rivet (19) passing through a bore (23, 16) in the guide surface (17), and in that the axis (13, 13') of the bore (23, 16) is at least approximately at right-angles to the axis (9) of the worm shaft.

2. A device according to claim 1, characterised in that the adjustment part (4) is provided with, extending in the direction of the worm shaft axis (9), a longitudinal slot (14) or longitudinal groove through which the shank (18) of the fixing screw (12) or the shank (22) of the fixing rivet (!9) passes.

3. A device according to claim 1 or 2, characterised in that the adjustment part (4) consists of a material which is soft in comparison with the material of the fixing screw (12) and into which the head (15) of the fixing screw (12) or the head (21) of the fixing rivet (19) becomes embedded when the adjustment part (4) is pressed against the guide surface (17).

4. A device according to claim 3, characterised in that the adjustment part (4) consists of a synthetic plastics material.

5. A device according to one of the preceding claims, characterised in that the adjustment part (4) comprises a seating (5) for the free end (6) of the worm shaft (2), which prevents the worm shaft moving aside in a direction away from the axis (7) of the worm wheel (3).

6. A device according to one of the preceding claims, characterised in that the adjustment part (4) is guided in a cross-sectionally preferably U-shaped guide rail (8) which is open in the direction of the head (15) of the fixing screw (12) or the head (21) of the fixing rivet (19) and the bottom of which constitutes the guide surface (17).

7. A device according to claim 6, characterised in that the guide rail (8) forms a part of the gear housing (10).

## Revendications

1. Dispositif d'entraînement de toits ouvrants, lève-glaces ou objets similaires faisant notamment partie de véhicules automobiles, comprenant un moteur d'entraînement (1) dont la commande du sens de rotation peut être inversée, et en aval duquel se trouve un engrenage à vis sans fin dont l'arbre (2) à vis sans fin forme un prolongement de l'arbre du moteur ; ainsi qu'un système de réglage du jeu axial de l'arbre (2) à vis sans fin, ce système présentant une pièce de réglage (4) guidée à coulissement dans la direction de l'axe (9) de l'arbre (2) à vis sans fin, et s'appliquant contre l'extrémité libre (6) dudit arbre (2) à vis sans fin, caractérisé par le fait que la pièce de réglage (4) peut être pressée contre une surface (17) de guidage de ladite pièce de réglage, au moyen d'une vis de blocage (12) ou d'un rivet de blocage (19), ladite vis de blocage (12) ou ledit rivet de blocage (19) traversant, respectivement, un perçage (23, 16) pratiqué dans la surface de guidage (17), et l'axe (13, 13') du perçage (23, 16) étant au moins approximativement perpendiculaire à l'axe (9) de l'arbre à vis sans fin.

2. Dispositif selon la revendication 1, caractérisé par le fait que la pièce de réglage (4) est pourvue d'une fente longitudinale (14) ou d'une saignée longitudinale s'étendant dans la direction de l'axe (9) de l'arbre à vis sans fin et à travers laquelle, respectivement, la vis de blocage (12) s'étend par sa tige (18) ou le rivet de blocage (19) s'étend par son fût (22).

3. Dispositif selon la revendication 1 ou 2, caractérisé par le fait que la pièce de réglage (4) est constituée d'un matériau tendre comparativement au matériau de la vis de blocage (12) et dans lequel, respectivement, ladite vis de blocage (12) "mord" par sa tête (15) ou le rivet de blocage (19) "mord" par sa tête (21) lorsque la pièce de réglage (4) est pressée contre la surface de guidage (17).

4. Dispositif selon la revendication 3, caractérisé par le fait que la pièce de réglage (4) consiste en une matière plastique.

5. Dispositif selon l'une des revendications précédentes, caractérisé par le fait que la pièce de réglage (4) possède un logement (5) qui est destiné à l'extrémité libre (6) de l'arbre (2) à vis sans fin, et empêche un déport dudit arbre à vis sans fin dans une direction l'éloignant de l'axe (7) de la roue (3) à denture hélicoïdale.

6. Dispositif selon l'une des revendications précédentes, caractérisé par le fait que la pièce de réglage (4) est guidée dans un rail de guidage (8) qui offre de préférence une section transversale configurée en U, est respectivement ouvert en direction de la tête (15) de la vis de blocage (12), ou de la tête (21) du rivet de blocage (19), et dont le fond forme la surface de guidage (17).

7. Dispositif selon la revendication 6, caractérisé par le fait que le rail de guidage (8) fait partie intégrante du carter de transmission (10).
